# EUROPEAN PATENT SPECIFICATION

(11) **EP 1 751 446 B1**
(45) Date of publication and mention of the grant of the patent: **24.02.2010**
(21) Application number: 05775709.8
(22) Date of filing: 03.06.2005
(51) Int. Cl.: F16D 65/21

(54) **ELECTRIC BRAKE POSITION AND FORCE SENSING AND CONTROL**
MESSUNG UND STEUERUNG VON POSITION UND KRAFT BEI ELEKTRISCHEN BREMSEN
COMMANDE ET DETECTION DE LA FORCE ET DE LA POSITION DE FREIN ELECTRIQUE

(30) Priority: 04.06.2004 US 577225 P
(43) Date of publication of application: 14.02.2007
(73) Proprietor: Goodrich Corporation, Charlotte, North Carolina 28217 (US)
(72) Inventor: RALEA, Mihai, Boonton Township, NJ 07005 (US)
(74) Representative: Hilleringmann, Jochen
(86) International application number: PCT/US2005/019701
(87) International publication number: WO 2005/119083

(56) References cited:
- WO-A-03/011668
- WO-A-2005/080162
- DE-A1- 10 228 115
- US-A- 4 995 483
- US-A1- 2003 029 680
- US-B1- 6 238 011

## Description

### Technical Field

The invention herein described relates generally to brake control systems, more particularly to electronic braking systems, and still more particularly to aircraft braking systems.

### Background of the Invention

Electric brake systems are known in the prior art. In such systems, electric motor-driven actuators are designed to drive corresponding actuator rams. Typically, the actuator rams extend to compress a brake disk stack against a back plate.

As the brake disks within the stack wear, the running clearance of the actuator rams correspondingly increases. To maintain an acceptable running clearance, means must be provided for adjusting the running clearance. U.S.-A-6,003,640, describes a system for adjusting the running clearance in an electric brake system by detecting the position of the actuator rams.

Furthermore, brake force variations may occur in within the brake disk stack due to external factors such as temperature, humidity, etc. Therefore, it has been necessary to provide a means for adjusting for brake force variations.

In the past, brake systems have used one of two means for controlling running clearance and brake force. The systems were designed to use either position control or force control. However, controlling the running clearance and brake force using position control was disadvantageous in that the system was susceptible to brake fade and/or lack of precise force application, especially in open loop, anti-skid off mode. Force-based control was disadvantageous due to the inability to satisfactorily maintain running clearance, thus losing anti-skid efficiency.

DE-A-102 28 115 is directed to a system and method for monitoring brake wear, calibrating the brakes when certain operating conditions are met, and providing a warning signal to the vehicle operator upon detection of critical brake lining wear. The control unit in D1 determines an operating position, i.e. running clearance position, based on actual clamping force measurements.

WO-A-03/011668, considered to represent the closest prior art, discloses a method and control system for establishing a relationship between an actuator position and an actuator clamping force in real time and using this relationship to provide a control signal. According to this document, the relationship between a measured actuator position and a measured actuator torque is fed into a transformation module that calculates the actual value of the actuator clamping force. The actual clamping force is then fed into the controller and applied to the brake. This document also describes determining the actual clamping force based on the clamping force measured by a force sensor.

US-B-6,238,011 is directed to a method and device for providing clearance adjustment as soon as the wheel brake has been released. This document may be viewed as providing closed-loop force control during the braking process. However, once the braking process ends, and the clearance adjustment period begins, the force feedback signal is no longer used to provide a control signal. Instead, closed-loop path control is used to adjust the clearance.

WO-A-2005/080162 is directed to a method and system that uses a motor commutation sensor output to determine the position of an actuator piston. The cited device uses closed-loop position control to maintain a running clearance position and provide dynamic braking performance.

In view of the aforementioned shortcomings associated with known brake systems, there remains a strong need in the art for a brake system capable of providing both position control and force control.

### Summary of the Invention

The present invention provides an electromechanical brake system as defined in claim 1. The dependent claims relate to individual embodiments of the invention.

According to one aspect of the invention, an electromechanical brake system is provided. The brake system includes an electromechanical brake actuator including an actuator ram for exerting a brake force on a brake stack of a wheel to be braked in response to a control signal. In addition, the brake system includes a fore sensor for sensing the brake force exerted on the brake stack by the actuator ram and outputting a force feedback signal based thereon; and a position sensor for sensing a position of the actuator ram and outputting a position feedback signal based thereon. Moreover, the brake system includes a controller for providing the control signal to the electromechanical brake actuator based in the force feedback signal and the position feedback signal.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### Brief Description of the Drawings

Fig. 1 is a simplified diagram of an electric brake system in accordance with an exemplary embodiment of the present invention;
Fig. 2 is a cross-sectional view of an exemplary actuator in accordance with the present invention;
Fig. 3 is a functional block diagram of an electric brake system in accordance with a first particular embodiment of the present invention;
Fig. 4 is a functional block diagram of an electric brake system in accordance with a second particular embodiment of the present invention; and
Fig. 5 is a functional block diagram of an electric brake system in accordance with a third particular embodiment of the present invention.

### Detailed Description of the Invention

The present invention will now be described with reference to the drawings, wherein like reference labels are used to refer to like elements throughout.

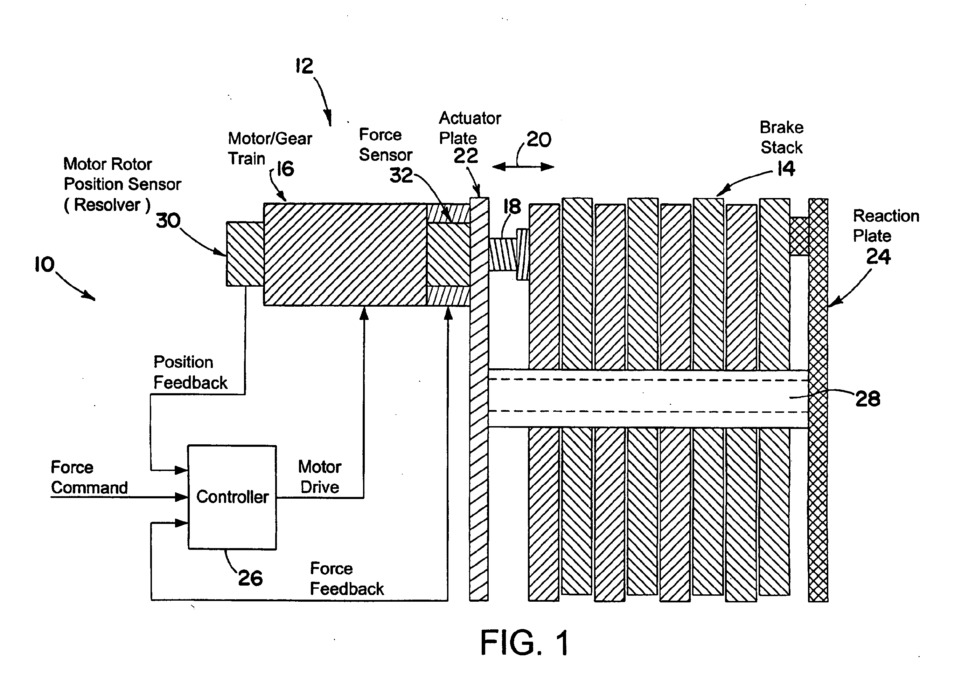

Referring initially to Fig. 1, an electric brake system 10 is illustrated in accordance with the present invention. As will be described in more detail below, the brake system 10 utilizes a force sensor that, in conjunction with a position sensor, is used to control the applied brake force and running clearance. By combining the use of both force control and a position control, the brake system 10 is less susceptible to brake fade or imprecise brake force application while still providing satisfactory running clearance adjustment.

The brake system 10 includes an electromechanical actuator 12 for exerting a controlled brake force on a multiple disk brake stack 14. In the exemplary embodiment, the brake stack 14 is associated with the wheel of an aircraft (not shown) to provide braking in response to pilot commands and/or anti-skid commands. However, it will be appreciated that the present invention is not limited to aircraft and has application to braking of virtually any type of vehicle.

The actuator 12 includes a motor and gear train 16 which drives an actuator ram 18 in an axial direction represented in Fig. 1 by arrow 20. The actuator 12 is mounted to an actuator plate 22 through which the actuator ram 18 extends. The brake stack 14 is positioned between the actuator plate 22 and a reaction plate 24. In order to exert a braking force on the wheel of the aircraft, the motor and gear train 16 is controlled by an electromechanical actuator controller (EMAC) 26 causing the actuator ram 18 to extend towards the brake stack 14. In this manner, a clamp or brake force is exerted on the brake stack 14 between the actuator ram 18 and the reaction plate 24. Torque is taken out by the brake stack 14 through a static torque tube 28 or the like.

In order to release a braking force, the controller 26 controls the motor and gear train 16 to drive the actuator ram 18 in the reverse direction away from the brake stack 14. In the event of no braking, it is desirable to provide a predefined running clearance between the head of the actuator ram 18 and the brake stack 14. Accordingly, the controller 26 controls the motor and gear train 16 to provide the desired running clearance.

The controller 26 receives as an input a force command signal. The value of the force command signal is typically proportional based on the degree to which the pilot has depressed a corresponding brake pedal. In the event of light braking, the force command signal may have a low value which causes the controller 26 to drive the motor and gear train 16 such that the actuator ram 18 exerts a light brake force on the brake stack 14. Similarly, in the event of heavy braking the force command signal may have a high value which causes the controller 26 to drive the motor and gear train 16 such that the actuator ram 18 exerts a heavy brake force on the brake stack 14. In addition, or in the alternative, the force command signal may be based on anti-skid control performed elsewhere within the aircraft as will be appreciated.

As shown in Fig. 1, the actuator 12 includes a position sensor 30 for sensing the position of the actuator ram 18. The position sensor 30 provides a position feedback signal which is input to the controller 26 for performing position based control in accordance with the present invention. In the exemplary embodiment, the position sensor 30 is a resolver which senses the rotor position of the motor in the motor and gear train 16. Based on the output of the resolver 30, the controller 26 is able to detect the direction and number of revolutions of the rotor. Since the ratio of the gear train in combination with the actuator ram 18 is known, the controller 26 is able to compute the relative position of the actuator ram 18 based on the output of the resolver 30.

According to the exemplary embodiment, the motor within the motor and gear train 16 is a brushless DC motor. Consequently, the controller 26 also utilizes the output of the resolver 30 to determine the appropriate phasing of the power signals provided to the motor via the motor drive signal to provide the necessary motor commutation. In this manner, the present invention is advantageous in that there is no need for separate position sensors for the DC motor and the actuator ram 18, respectively. This provides both a savings in cost and complexity.

Of course, it will be appreciated that the position sensor 30 need not be a resolver associated with a brushless DC motor. The position sensor 30 may in fact be another type of position sensor for sensing the position of the actuator ram 18 including, but not limited to, an LVDT sensor, etc. Similarly, although the position sensor 30 as described herein provides relative positioning, it will be appreciated that the sensor 30 in another embodiment may detect absolute position. The present invention contemplates each and every type of position sensor.

The actuator 12 further includes a force sensor 32 which detects the actual brake force exerted by the actuator ram 18 onto the brake stack 14. The output of the force sensor 32 is fed back as a force feedback signal and is input to the controller 26 for performing force based control in accordance with the present invention. The force sensor 32 may be any type of known force sensor including, but not limited to, a force load cell or the like.

In the brake system 10 shown in Fig. 1, for sake of simplicity only a single actuator 12 is provided for applying a brake force to the brake stack 14. However, it will be appreciated that typically the system 10 will include multiple actuators 12 spaced evenly apart on the actuator plate 22 and each for exerting brake force to the brake stack 14. Ideally, each actuator 12 has its own position sensor 30 and force sensor 32 which provide feedback signals to the controller 26. Since the operation of the multiple actuators is identical, only a single actuator 12 is described herein for sake of brevity.

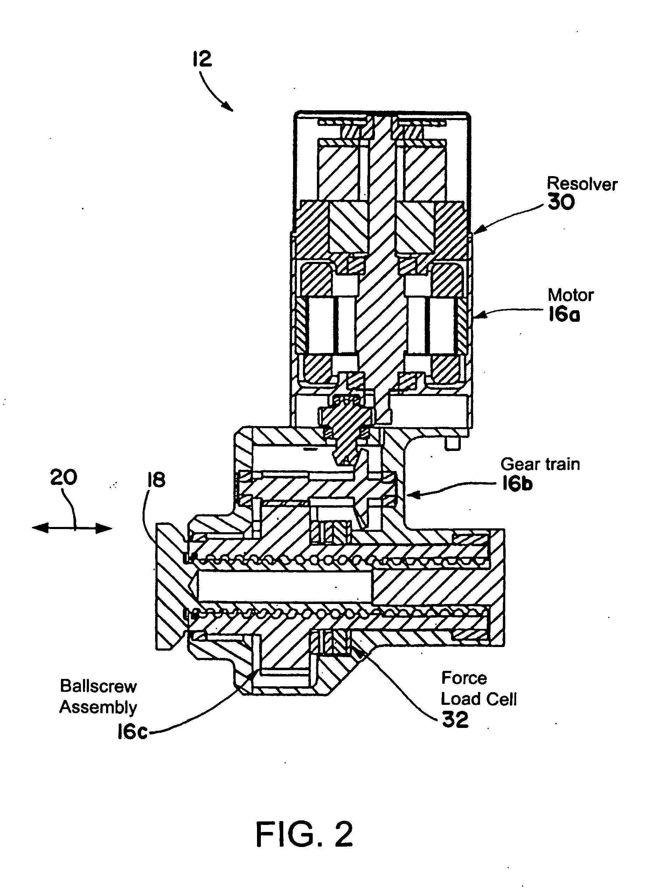

Referring now to Fig. 2, the exemplary actuator 12 is shown in cross-section. The actuator 12 includes the motor 16a with an integral resolver position sensor 30. The motor 16a drives the gear train 16b which in turn operates a ballscrew assembly 16c. The ballscrew assembly 16c in turn drives the actuator ram 18 in the axial direction of arrow 20 so as to exert a force on the brake stack 14 (Fig. 1). The ballscrew assembly 16c reaction, and therefore load reaction force, is taken out through the force sensor 32 and into the actuator housing. In the exemplary embodiment, the force sensor 32 is a force load cell located between the ballscrew assembly 16c and the actuator housing. In this manner, the output of the force sensor 32 is indicative of the brake force applied by the actuator ram 18 to the brake stack 14.

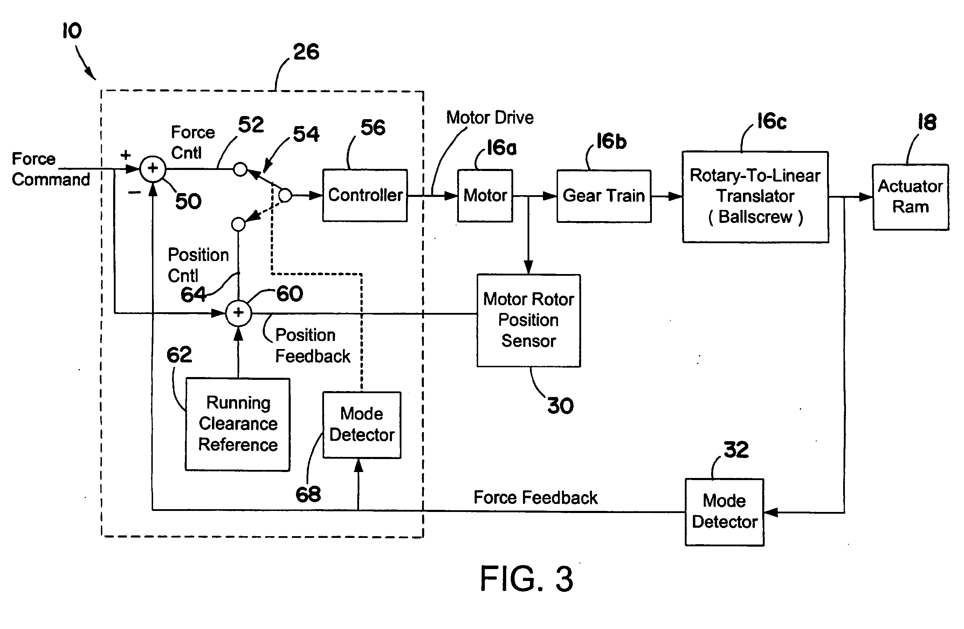

Fig. 3 illustrates a control method in accordance with a first particular embodiment of the brake system 10. In accordance with the embodiment of Fig. 3, the force sensor 30 is used to implement a closed loop force control servo system that controls the brake force application in response to the external brake force command signal. The position sensor 30 (e.g., motor resolver) is used to maintain the desired running clearance.

More specifically, the force command signal representing a desired braking force is input to a first adder 50 included in the controller 26. The first adder 50 compares the force command signal to the actual measured force as represented by the force feedback signal. The difference signal is output from the adder 50 on line 52. With switch 54 in the position shown in Fig. 3, the difference signal is input to a subcontroller 56 included within the controller 26. The subcontroller 56 is programmed in accordance with conventional programming techniques to adjust the motor drive signal output to the motor 16a in order to minimize the difference signal output from the adder 50. In this manner, the system 10 provides closed loop force control.

When the switch 54 is in the position shown in phantom in Fig. 3, the controller 26 is configured to obtain and maintain the desired running clearance. Specifically, the position feedback signal from the position sensor 30 is input to a second adder 60. The second adder 60 serves to compare the position feedback sensor 30, representing the position of the actuator ram 18, with a precalculated running clearance position reference 62. As will be appreciated, the position feedback sensor 30 may include a position data accumulator (not shown) so as to maintain and provide current position information of the actuator ram 18 from the resolver to the second adder 60.

The second adder 60 compares the position of the actuator ram 18 to the running clearance position reference 62 and provides a difference signal on line 64. The difference signal is input to the subcontroller 56 via the switch 54. The subcontroller 56 is programmed in accordance with conventional programming techniques to obtain and maintain a desired running clearance based on the difference signal. Details regarding an exemplary manner for obtaining and maintaining the desired running clearance are provided in the aforementioned U.S.-A-6,003,640. As is also described in this reference, the running clearance position reference 62 may be updated to account for brake stack wear, etc. using the techniques described therein.

It is noted that the force command signal, representing a position command signal when the switch 54 is in the position shown in phantom in Fig. 3, is also input to the second adder 60. In the event of no commanded braking, the force command is effectively zero and the difference signal on line 64 will cause the subcontroller 56 to move the actuator ram 18 to the desired running clearance position a predetermined distance away from the brake stack 14. Upon initiation of commanded braking, the force command signal becomes non-zero causing the output of the adder 60 to increase in magnitude. This in turn causes the subcontroller 56 to control the motor and gear train 16 such that the actuator ram 18 is driven through the running clearance and begins to exert a brake force on the brake stack 14.

A mode detector 68 included in the controller 26 senses the force feedback signal provided from the force sensor 32. When the mode detector 68 detects at least a predetermined amount of brake force (e.g., 10% of the maximum brake force), the mode detector 68 causes the switch 54 to switch to the position shown in Fig. 3 so as to provide force control. When the mode detector 68 detects less than at least the predetermined amount of brake force, the mode detector 68 causes the switch 54 to switch to the position shown in phantom in Fig. 3 so as to revert to position control. In this manner, the system 10 provides force control during a braking event and position control during a non-braking event.

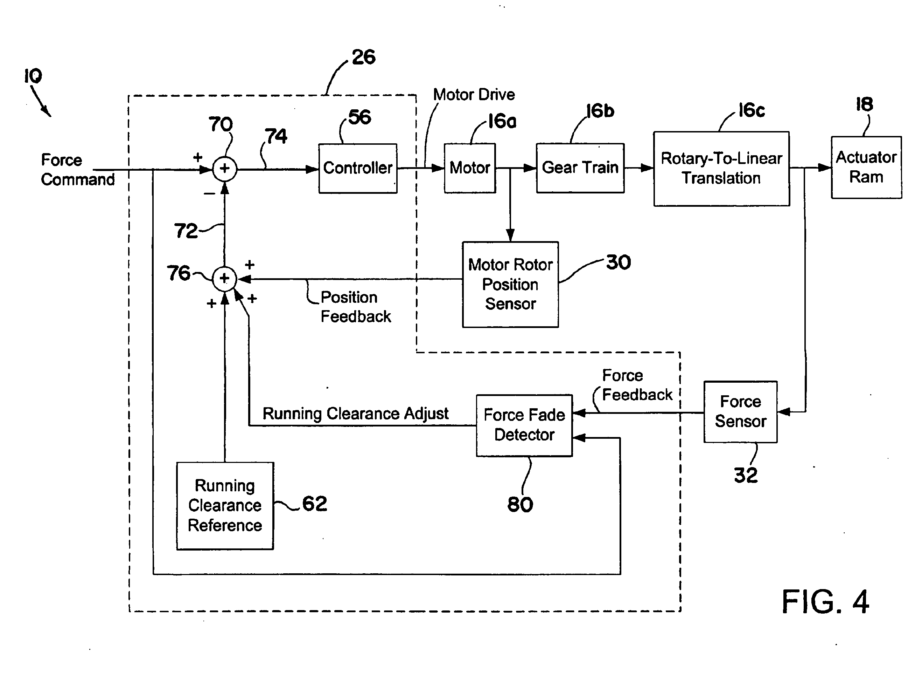

Fig. 4 illustrates a control method in accordance with a second particular embodiment of the brake system 10. In accordance with the embodiment of Fig. 4, the position sensor 30 (again with a position accumulator when using the motor resolver) is used to implement a closed loop position control servo system that controls the brake force application in response to external commands. The force sensor 32 is used to adjust for brake fade due to thermal expansions and other factors, for example.

In particular, the force command signal is input to a first adder 70 included in the controller 26. According to this particular embodiment, the force command signal in effect represents a position command signal as will be appreciated. The first adder 70 compares the effective position command signal with a cumulative position feedback signal input to the adder 70 via line 72. The adder 70 outputs a difference signal on line 74 to the subcontroller 56 included within the controller 26. The subcontroller 56 is programmed using conventional programming techniques to minimize effectively the difference signal on line 74 by adjusting the position of the actuator ram 18.

The cumulative position feedback signal on line 72 is output from a second adder 76 included within the controller 26. The second adder 76 receives as inputs the position feedback signal from the position sensor 30, a running clearance adjust signal from a force fade detector 80, and the running clearance position reference 62. The force fade detector 80 is included within the controller 26 and receives as inputs the output of the force sensor 32 and the force command signal. The force fade detector 80 is configured to compare the applied force as represented by the force feedback signal with the desired force as represented by the force command signal. If the force fade detector 80 detects the applied force to differ substantially from the desired force, for example due to brake fade as a result of temperature, etc., the force fade detector 80 outputs an adjustment value to the adder 76 to compensate for such reduction in brake force.

For example, the force fade detector 80 may be configured to detect when the applied force differs from the desired force by a predetermined amount (e.g., 10%). In such event, the force fade detector provides an adjustment value to the adder 76. The adjustment value may be a predetermined fixed value, for example. Alternatively, the adjustment value may be incremented/decremented over time depending on whether the detected force fade is increasing or decreasing with time. Assuming a non-braking event under normal operating conditions (e.g., temperature, humidity, etc.), the force command signal will be effectively zero as will be the output of the force fade detector 80. The output of the adder 76 on line 72 will represent the difference between the position of the actuator ram 18 as determined by the position sensor 30 and the running clearance position reference 62. The difference signal on line 72 is then input to the subcontroller 56 via the adder 70. As in the embodiment of Fig. 3, the subcontroller 56 is programmed in accordance with conventional programming techniques to obtain and maintain a desired running clearance based on the difference signal. Details regarding an exemplary manner for obtaining and maintaining the desired running clearance are provided in the aforementioned U.S.-A-6,003,640. As is also described in this reference, the running clearance position reference 62 may be updated to account for brake stack wear, etc. using the techniques described therein.

In the event of a braking condition under normal operating conditions, the force command signal would become non-zero whereas the adjustment value output by the force fade detector would remain zero. In such instance, the force command signal will cause the output of the adder 74 to increase resulting in the subcontroller 56 driving the actuator ram 18 through the running clearance spacing so as to contact and apply force to the disk stack 14. Closed loop position control is then provided by virtue of the feedback signal from the position sensor 30.

Should the force fade detector 80 detect brake fade due to temperature, humidity, etc., the adjustment value provided to the adder 76 serves to adjust the effective running clearance. As a result, the applied brake force is increased to the desired level. As brake fade dissipates due to cooling, etc., the adjustment value provided to the adder 76 is reduced, thereby reducing the compensation.

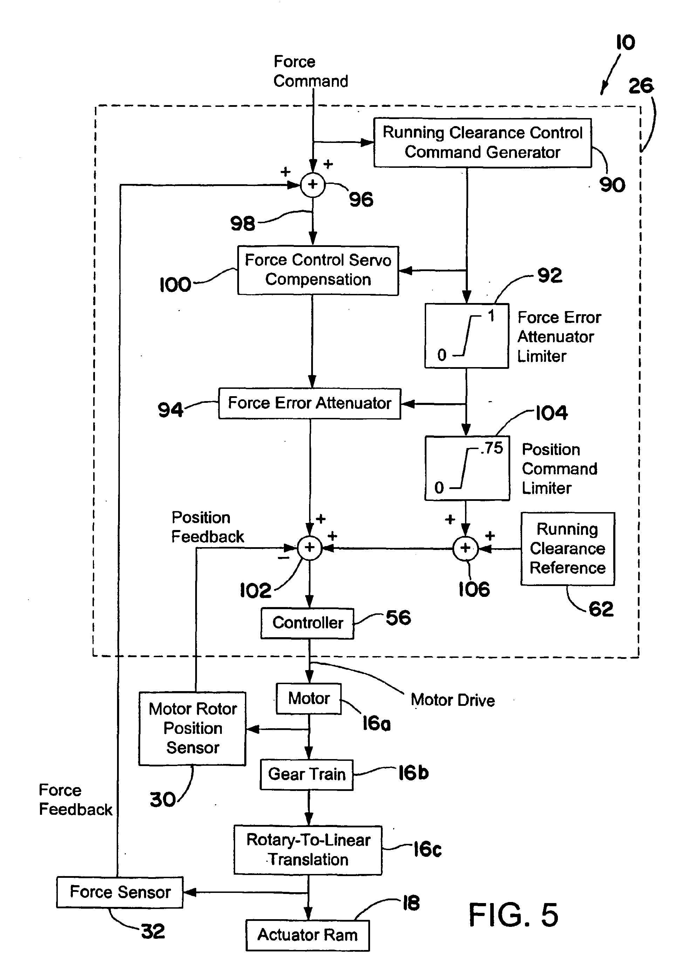

Fig. 5 illustrates a control method in accordance with a third particular embodiment of the brake system 10. The approach in Fig. 5 uses the force sensor 32 to implement a closed loop force control servo system that controls the brake force application in response to the external force command signal. When operated in this mode there needs to be a method of retracting the actuator ram 18 to the running clearance position. This is accomplished using a force error attenuator and/or position control as described below.

For force commands between 0 and 10% full scale force the force error is proportionally attenuated by a multiplication factor of 0 to 1. More specifically, for purposes of maintaining the running clearance the force command signal in effect represents a position command signal (as represented by conversion block 90). The force command signal is input to a force error attenuator limiter 92. The output of the attenuator limiter 92 is configured so as to provide a multiplication factor of 0 to 1 for values of the force command signal between 0 to 10%.

The output of the force error attenuator limiter 92 is provided to a force error attenuator 94 in the force control loop. A first adder 96 compares the force command signal with the force feedback signal output by the force sensor 32. The difference signal on line 98 represents the force error as will be appreciated. The force control loop may include a servo compensation block 100 as shown, as may the other embodiments described herein as will be appreciated. The force error signal is passed through the compensation block 100 and into the force error attenuator 94. The force error attenuator 94 in turn proportionally attenuates the force error signal in accordance with the output of the force error attenuator limiter 92.

As a result, the output of the force error attenuator 94 generates a proportional position command between 0 and running clearance. This attenuated command as input to a second adder 102 positions the actuator ram 18 between running clearance and brake stack 14 contact position.

In addition a feed forward position command can be applied, equal to the running clearance, to minimize force errors due to equivalent dead-band induced by the running clearance in the force control loop. Such feed forward position command is provided via the output of the force error attenuator limiter 92 whose output is also provided to a position command limiter 104. The position command limiter 104 limits its output to between 0 and 0.75, for example. This limited output is then input to a third adder 106. The third adder 106 combines the limited fed forward position command with the running clearance position reference 62.

The output of the adder 106 is input to the adder 102 which produces an error signal at its output. The error signal is provided to the subcontroller 56 which provides a motor drive signal to the motor 16a similar to the other embodiments discussed herein.

Those having ordinary skill in the art will therefore appreciate that the brake system in accordance with the present invention combines the use of both force control and a position control. As a result, the brake system is less susceptible to brake fade or imprecise brake force application while still providing satisfactory running clearance adjustment.

Although the invention has been shown and described with respect to certain preferred embodiments, it is obvious that equivalents and modifications will occur to others skilled in the art upon the reading and understanding of the specification. The present invention includes all such equivalents and modifications, and is limited only by the scope of the following claims.

## Claims

1. An electromechanical brake system, comprising:
- an electromechanical brake actuator (12) including an actuator ram (18) for exerting a brake force on a brake stack (14) of a wheel to be braked in response to a control signal;
- a force sensor (32) for sensing the brake force exerted on the brake stack (14) by the actuator ram (18) and outputting a force feedback signal based thereon;
- a position sensor (30) for sensing a position of the actuator ram (18) and outputting a position feedback signal based thereon; and
- a controller (26) for providing the control signal to the electromechanical brake actuator (12) based on the force feedback signal and the position feedback signal,
**characterized in that**
- the control signal is derived from the position feedback signal and a difference between a desired brake force and the sensed brake force as represented by the force feedback signal.

2. The electromechanical brake system of claim 1, wherein the controller receives as an input a force command signal representative of an operator requested braking event.

3. The electromechanical brake system of claim 1, wherein the controller receives as an input a force command signal representative of an antiskid control based braking event.

4. The electromechanical brake system of any one of claims 1 to 3, wherein the position sensor (30) comprises a resolver.

5. The electromechanical brake system of claim 4, wherein the electromechanical brake actuator (12) comprises a motor (16a) for driving the actuator ram (18), and the controller (26) also uses an output of the resolver to determine appropriate phasing of power signals provided to the motor for commutation,

6. The electromechanical brake system of any one of claims 1 to 5, wherein the position sensor comprises an LVDT sensor.

7. The electromechanical brake system of any one of claims 1 to 6, wherein the position sensor (30) provides relative positioning.

8. The electromechanical brake system of any one of claims 1 t o 6, wherein the position sensor (30) provides absolute positioning.

9. The electromechanical brake system of any one of claims 1 to 8, wherein the force sensor comprises a force load cell.

10. The electromechanical brake system of any one of claims 1 to 9, further comprising at least one additional electromechanical brake actuator (12) and actuator ram (18) for exerting an additional brake force on the brake stack (14) of the wheel to be braked in response to a control signal, and a corresponding at least one additional force sensor (32) and position sensor (30) for outputting a force feedback signal and position feedback signal, respectively.

11. The electromechanical brake system of any one of claims 1 to 10, wherein the controller (26) provides closed loop position servo control to control brake force application in response to an external command during a braking event.

12. The electromechanical brake system of claim 11, wherein during the braking event the controller (26) adjusts for brake fade based on the difference between the desired brake force and the sensed brake force as represented by the force feedback signal.

13. The electromechanical brake system of any one of claims 1 to 12, wherein the controller (26) provides closed loop force servo control to control brake force application in response to an external command during a braking event.

14. The electromechanical brake system of claim 13, wherein the controller (26) provides a desired running clearance based on the position feedback signal.

15. The electromechanical brake system of claim 13 or 14, wherein the position feedback signal is compared to a position command signal derived from the external command.

16. The electromechanical brake system of any one of claims 1 to 15, wherein the wheel is the wheel of an aircraft.

## Patentansprüche

1. Elektromechanisches Bremssystem mit:
- einem elektromechanischen Bremsenbetätiger (12) mit einem Betätigerstößel (18) zum Aufbringen einer Bremskraft auf einen Bremsenstapel (14) eines zu bremsenden Rades in Reaktion auf ein Steuersignal;
- einem Kraftsensor (32) zum Erfassen der auf den Bremsenstapel (14) durch den Betätigerstößel (18) aufgebrachten Bremskraft und zum Ausgeben eines darauf basierenden Kraft-Rückkopplungssignals;
- einem Positionssensor (30) zum Erfassen der Position des Betätigerstößels (18) und zum Ausgeben eines darauf basierenden Positions-Rückkopplungssignals; und
- einer Steuerung (26) zum Liefern des Steuersignals an den elektromechanischen Bremsenbetätiger (12) auf der Basis des Kraft-Rückkopplungssignals und des Positions-Rückkopplungssignals.
**dadurch gekennzeichnet, dass**
- das Steuersignal aus dem Positions-Rückkopplungssignal und einer Differenz zwischen einer gewünschten Bremskraft und der durch das Kraft-Rückkopplungssignal wiedergegebenen erfassten Bremskraft abgeleitet ist.

2. Elektromechanisches Bremssystem nach Anspruch 1, bei welchem die Steuerung als Eingang ein Kraft-Befehlssignal empfängt, welches ein vom Bediener angefordertes Bremsereignis wiedergibt.

3. Elektromechanisches Bremssystem nach Anspruch 1, bei welchem die Steuerung als Eingang ein Kraft-Befehlssignal empfängt, welches ein auf einer Antirutsch-Steuerung basierendes Bremsereignis wiedergibt.

4. Elektromechanisches Bremssystem nach einem der Ansprüche 1 bis 3, bei welchem der Positionssensor (30) einen Resolver aufweist.

5. Elektromechanisches Bremssystem nach Anspruch 4, bei welchem der elektromechanische Bremsenbetätiger (12) einen Motor (16a) zum Antreiben des Betätigerstößels (18) aufweist, und die Steuerung (26) ferner einen Ausgang des Resolvers verwendet, um eine geeignete Synchronisierung von Energiesignalen, welche zur Kommutation an den Motor geliefert werden, zu bestimmen.

6. Elektromechanisches Bremssystem nach einem der Ansprüche 1 bis 5, bei welchem der Positionssensor einen LVDT-Sensor aufweist.

7. Elektromechanisches Bremssystem nach einem der Ansprüche 1 bis 6, bei welchem der Positionssensor (30) eine relative Position angibt.

8. Elektromechanisches Bremssystem nach einem der Ansprüche 1 bis 6, bei welchem der Positionssensor (30) eine absolute Position angibt.

9. Elektromechanisches Bremssystem nach einem der Ansprüche 1 bis 8, bei welchem der Kraftsensor eine Kraftmesszelle aufweist.

10. Elektromechanisches Bremssystem nach einem der Ansprüche 1 bis 9, ferner mit jeweils zumindest einem zusätzlichen elektromechanischen Bremsenbetätiger (12) und Betätigerstößel (18) zum Aufbringen einer zusätzlichen Bremskraft auf den Bremsenstapel (14) des zu bremsenden Rades in Reaktion auf ein Steuersignal, und jeweils mindestens einem entsprechenden zusätzlichen Kraftsensor (32) und Positionssensor (30) zum Ausgeben eines Kraft-Rückkopplungssignals bzw. eines Positions-Rückkopplungssignals.

11. Elektromechanisches Bremssystem nach einem der Ansprüche 1 bis 10, bei welchem die Steuerung (26) eine Positions-Servoregelung bewirkt, um das Aufbringen der Bremskraft in Reaktion auf einen externen Befehl während eines Bremsereignisses zu steuern.

12. Elektromechanisches Bremssystem nach Anspruch 11, bei welchem die Steuerung (26) während des Bremsereignisses Bremsfading basierend auf der Differenz zwischen der gewünschten Bremskraft und der durch das Kraft-Rückkopplungssignal wiedergegebenen erfassten Bremskraft ausgleicht.

13. Elektromechanisches Bremssystem nach einem der Ansprüche 1 bis 12, bei welchem die Steuerung (26) eine Kraft-Servoregelung bewirkt, um das Aufbringen der Bremskraft in Reaktion auf einen externen Befehl während eines Bremsereignisses zu steuern.

14. Elektromechanisches Bremssystem nach Anspruch 13, bei welchem die Steuerung (26) basierend auf dem Positions-Rückkopplungssignal ein gewünschtes Laufspiel bewirkt.

15. Elektromechanisches Bremssystem nach Anspruch 13 oder 14, bei welchem das Positions-Rückkopplungssignal mit einem aus dem externen Befehl abgeleiteten Positionsbefehlssignal verglichen wird.

16. Elektromechanisches Bremssystem nach einem der Ansprüche 1 bis 15, bei welchem das Rad ein Flugzeugrad ist.

## Revendications

1. Système de freinage électromécanique comprenant:
- un actionneur (12) de frein électromécanique avec un poussoir de l'actionneur (18) pour appliquer une force de freinage sur une pile de frein (14) d'une roue à freiner en réponse à un signal de commande;
- un capteur de force (32) pour détecter la force de freinage exercée sur la pile de frein (14) par ledit poussoir de l'actionneur (18) et pour sortir un rétro-signal de force sur la base de celle-ci;
- un capteur de position (30) pour détecter la position du poussoir de l'actionneur (18) et pour sortir un rétro-signal de position sur la base de celle-ci; et
- une commande (26) pour fournir le signal de commande à l'actionneur de frein électromécanique (12) sur la base du rétro-signal de force et du rétro-signal de position,
**caractérisé en ce que**
- le signal de commande est dérivé du rétro-signal de position et d'une différence entre une force de freinage désirée et la force de freinage détectée, représentée par le rétro-signal de force.

2. Système de freinage électromécanique selon la revendication 1, dans lequel la commande reçoit comme entrée un signal de commande de force représentant un évènement de freinage demandé par l'opérateur.

3. Système de freinage électromécanique selon la revendication 1, dans lequel la commande reçoit comme entrée un signal de commande de force représentant un évènement de freinage basé sur une commande antidérapage.

4. Système de freinage électromécanique selon l'une quelconque des revendications 1 à 3, dans lequel le capteur de position (30) comprend un dispositif syncro.

5. Système de freinage électromécanique selon la revendication 4, dans lequel l'actionneur de frein électromécanique (12) comprend un moteur (16a) pour entrainer ledit poussoir de l'actionneur (18), et ladite commande (26) se sert en outre d'une sortie du dispositif syncro pour déterminer la synchronisation appropriée de signaux d'énergie fournis au moteur pour la commutation.

6. Système de freinage électromécanique selon l'une quelconque des revendications 1 à 5, dans lequel le capteur de position comprend un capteur du type LVDT.

7. Système de freinage électromécanique selon l'une quelconque des revendications 1 à 6, dans lequel le capteur de position (30) fournit une position relative.

8. Système de freinage électromécanique selon l'une quelconque des revendications 1 à 6, dans lequel le capteur de position (30) fournit une position absolue.

9. Système de freinage électromécanique selon l'une quelconque des revendications 1 à 8, dans lequel le capteur de force comprend une cellule de mesure de force.

10. Système de freinage électromécanique selon l'une quelconque des revendications 1 à 9, en outre comprenant au moins un actionneur (12) de frein électromécanique additionnel et un poussoir de l'actionneur (18) additionnel pour appliquer une force de freinage additionnelle sur la pile de frein (14) de la roue à freiner en réponse à un signal de commande, et au moins un capteur de force (32) additionnel correspondant et un capteur de position (30) additionnel correspondant pour respectivement sortir un rétro-signal de force et un rétro-signal de position.

11. Système de freinage électromécanique selon l'une quelconque des revendications 1 à 10, dans lequel la commande (26) fournit une servoréglage à boucle fermé pour commander l'application de la force de freinage en réponse à une commande externe pendant un évènement de freinage.

12. Système de freinage électromécanique selon la revendication 11, dans lequel, pendant l'évènement de freinage, la commande (26) ajuste un évanouissement de frein sur la base de la différence entre la force de freinage désirée et la force de freinage détectée, représentée par le rétro-signal de force.

13. Système de freinage électromécanique selon l'une quelconque des revendications 1 à 12, dans lequel la commande (26) fournit une servoréglage à boucle fermé pour commander l'application de la force de freinage en réponse à une commande externe pendant un évènement de freinage.

14. Système de freinage électromécanique selon la revendication 13, dans lequel la commande (26) cause un jeu de roulement sur la base du rétro-signal de position.

15. Système de freinage électromécanique selon la revendication 13 ou 14, dans lequel le rétro-signal de position est comparé à un signal de commande de position dérivé de la commande externe.

16. Système de freinage électromécanique selon l'une quelconque des revendications 1 à 15, dans lequel la roue est une roue d'avion.
